# EUROPEAN PATENT SPECIFICATION

(11) **EP 1 689 813 B1**
(45) Date of publication and mention of the grant of the patent: **02.12.2009**
(21) Application number: 04794048.1
(22) Date of filing: 04.10.2004
(51) Int. Cl.: C08L 23/00, C08L 23/10, C08L 23/04

(54) **HIGH IMPACT STRENGTH FILM AND NON-PVC CONTAINING CONTAINER AND POUCH AND OVERPOUCH**
SCHLAGZÄHE FOLIE UND PVC-FREIER BEHÄLTER UND BEUTEL UND ÜBERBEUTEL
FILM PRESENTANT UNE RESISTANCE AU CHOC ELEVEE, RECIPIENT EXEMPT DE PVC, POCHETTE ET SURPOCHE ASSOCIEES

(30) Priority: 17.10.2003 US 688843
(43) Date of publication of application: 16.08.2006
(73) Proprietor: Baxter International Inc., Deerfield, Illinois 60015 (US); Baxter Healthcare S.A., 8304 Zurich (CH)
(72) Inventor: SHANG, Sherwin, Vernon Hills, Illinois 60061 (US); WOO, Lecon, Libertyville, Illinois 60048 (US); YANG, Tahua, Woodridge, Illinois 60517 (US); LING, Michael T.K., Vernon Hills, Illinois 60061 (US); SANDFORD, Craig, Buffalo Grove, Illinois 60089 (US)
(74) Representative: Probert, Gareth David
(86) International application number: PCT/US2004/032545
(87) International publication number: WO 2005/040268

(56) References cited:
- WO-A1-93/18106
- WO-A1-99/03924
- WO-A2-03/055943
- US-A- 5 274 024
- US-A1- 2002 099 125
- US-A1- 2002 172 833
- US-A1- 2002 176 953
- US-A1- 2003 045 640
- US-B1- 6 423 776
- US-B1- 6 455 620
- US-B1- 6 511 755

## Description

### BACKGROUND OF THE INVENTION:

The present invention relates generally to polymer blends for fabricating multilayer films, and more particularly to polymer blends for fabricating multilayer films that have high impact strength and optionally high barrier to water and gas transmission. The multilayer films of the present invention are suitable for fabricating primary containers and overpouches for primary containers, to be used in medical and other applications.

In the medical field, primary containers are used to collect, store, transport, and ultimately deliver therapeutic fluids, nutritional solutions, respiratory therapy agents, dialysis solutions, blood, blood products, plasma derivatives, plasma expanders, blood substitutes, anti-coagulants, blood preservatives, and other therapeutic agents. Oftentimes, these primary containers are placed into secondary containers such as an overpouch to decrease the water vapor and/or gas transmission rate to maintain the integrity and volume of the agent contained within the primary container. The primary container can be attached to a tubing set or tubing sets, and be accompanied by other containers to form a therapeutic fluid delivery set.

The overpouch must have a unique combination of properties. For example, it is desirable that the overpouch be optically transparent in order to inspect visually the contents of the primary container for contaminants to the agent contained therein. At a minimum, the transparency must permit the container's label copy to be legible.

The overpouch material must also be functional over a wide range of temperatures. For example, certain premixed drug solutions are stored and transported in containers at temperatures of -10°C to minimize the drug degradation. Further, the same package must have the ability to withstand an autoclaving or sterilization process, which is usually accomplished using steam at temperatures of about 121°C and at elevated pressures. Further, the overpouch material must exhibit high impact strength after exposure to such temperature abuse.

In addition, it is desirable that the overpouch provide a barrier to oxygen, moisture and carbon dioxide which may degrade the contents of the primary container.

The overpouch must also allow easy access to the inside, primary container by providing an "easy-open" feature such as a tear strip, notch, slit, or the like where no cutting implement is needed.

It is also desirable that the overpouch be free from, or have a low content of, low molecular weight additives such as plasticizers, stabilizers and the like, which could be released into the medications or biological fluids that are contained within the primary container inside the overpouch, thereby potentially causing danger to patients who are using such devices.

While these characteristics are desirable in an overpouch material, the need for an overpouch could be eliminated if these same characteristics could be achieved in the primary container itself. It is therefore desirable to produce a primary container made of a material exhibits the characteristics described above.

The present invention is provided to solve these and other problems.

### SUMMARY OF THE INVENTION:

According to the invention, there is provided a monolayer film according to claim 1, a multilayer film according to claim 7 and a multilayer film according to claim 8.

There is disclosed herein a monolayer film fabricated from a polymer blend of a first component selected from the group consisting of an ethylene containing polymer, the first component present in an amount by weight of the film from about 60% to about 1%, the first component having a first melting point temperature determined by DSC, a second component selected from the group consisting of propylene containing polymers and methyl pentene containing polymers, the second component being present in an amount by weight of the film from about 99% to about 40%, the second component having a second melting point temperature determined by DSC; and the film being capable of withstanding steam sterilization at a temperature from about 100°C to about 130°C. The film after steam sterilization has sufficient impact strength to withstand a drop from 2-44 m (8 feet) without rupturing. The film does not require that any of its components be cross-linked or that it be exposed to cross-linking radiation.

There is also disclosed herein a multiple layered film having a seal layer from the polymer blend described above and a second layer of a barrier material.

The present invention relates to fabricating containers for numerous purposes such as to contain medical solutions or for food products, multiple chamber containers and overpouches.

These and other aspects and attributes of the present invention will be discussed with reference to the following drawings and accompanying specification.

### BRIEF DESCRIPTION OF THE DRAWINGS:

FIG. 1 is a cross-sectional view of a multiple layer film of the present invention;
FIG. 2 is a cross-sectional view of a multiple layered film of the present invention;
FIG. 3 is a flowable materials container fabricated from a film of the present invention;
FIG. 4 is a monolayer film of the present invention; and
FIG. 5 is a multiple chambered container with a peelable seal separating the chambers.

### DETAILED DESCRIPTION OF THE INVENTION:

The present invention is susceptible of embodiments in many different forms. Preferred embodiments of the invention are disclosed with the understanding that the present disclosure is to be considered as exemplifications of the principles of the invention and are not intended to limit the broad aspects of the invention to the embodiments illustrated.

The present invention provides monolayer films and multiple layer films. The monolayer film will be fabricated from a polymer blend containing at least two components of an ethylene containing polymer and a propylene containing polymer. The multiple layer films of the present invention include the monolayer film as a layer and have additional layers such as oxygen barrier layers from polymers or polymer blends as follows.

### I. Oxygen Barrier Polymer Blends and Multilayer Films Therefrom

The polymer blends utilized in the oxygen and water barrier layer of the multilayer films described herein are ethylene vinyl alcohol copolymers and polyamide containing polymers.

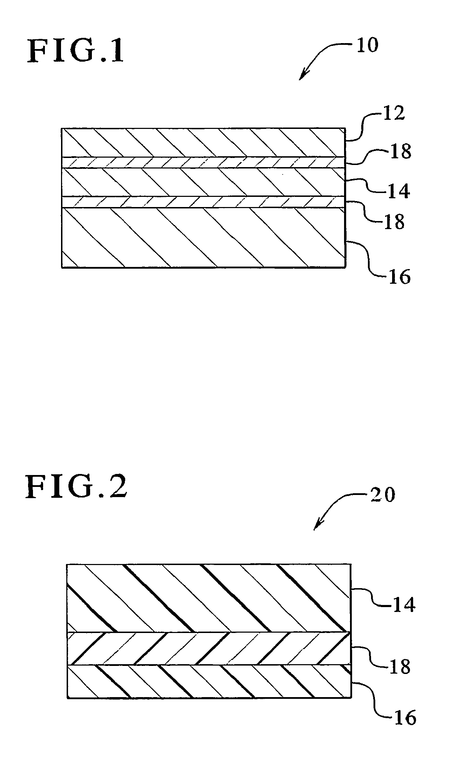

FIG. 1 shows a five layered film structure 10 having an outer layer **12,** a barrier layer **14,** and an inner layer **16.** The film structure of FIG. 1 may also contain tie layers **18,** located between the barrier layer **14** and the outer layer **12,** and between the barrier layer **14** and the inner layer **16.** The barrier layer **14** of the film of FIG. 1 contains an ethylene vinyl alcohol copolymer, or a polyamide containing polymer. The inner layer **16** contains a blend of an ethylene and α-olefin copolymer and a propylene containing polymer discussed in detail below. The outer layer **12,** contains a material selected from the group consisting of a polyolefin, a polyamide and a polyester.

FIG. 2 shows a three layered film structure **20** having a barrier layer **14,** and an inner layer **16** connected by a tie layer **18.** The barrier layer **14** of this film is fabricated from a polyamide containing polymer and the inner layer 16 is the same as the inner layer of the film of FIG. 1.

### A. Ethylene Vinyl Alcohol Copolymers

In one embodiment of the present invention, an ethylene vinyl alcohol (EVOH) copolymer is utilized as an oxygen barrier core layer. Suitable EVOH copolymers may be found in U.S. Patent No. 6,083,587,

which discloses EVOH copolymers which have about 25% to about 45% of ethylene, and a melting point of about 150-195°C. In an embodiment, the EVOH has an ethylene content of 32 mole percent.

Other EVOH copolymers suitable for the present invention, described in U.S. Patent No. 6,479,160, are ethylene vinyl alcohol copolymers which contain about 44% ethylene, a number average molecular weight of about 29,500 and a melting point of 164°C. Another suitable grade of EVOH copolymers has about 32% mole ethylene with a melting point of 183°C. A further suitable copolymer has about 29% ethylene, a number average molecular weight of about 22,000 and a melting point of 188°C. The EVOH layer of the invention may additionally contain a functional oxidizable polydiene or polyether as an oxygen scavenger. Suitable oxidizable polydienes are described below.

The ethylene vinyl alcohol composition may contain an ethylene vinyl alcohol copolymer grade which is retortable. The term "retort" as used herein is a process where a package is conditioned in steam at 121°C for 30 minutes. A retortable grade of ethylene vinyl alcohol is defined as a material which remains clear without haze or microcracking after conditioning at 121°C in steam for 30 minutes.

The oxygen barrier properties of EVOH are adversely impacted upon exposure to water. Thus, it is important to keep the EVOH barrier layer **14** of the films of the present invention dry. To this end, an outer layer **12** is used to assist in the removal of water that makes its way to the barrier layer **14** through the inner layer **16,** or otherwise to maintain the oxygen barrier properties of the barrier layer **14.**

The outer layer 12 used in conjunction with the EVOH barrier layer **14** may be a polyamide, polyester, polyolefin or other material that aids in the escape of water away from the barrier layer **14.** Suitable polyamide and polyolefin polymer blends are discussed below. Suitable polyesters for the outer layer **12** include polycondensation products of di- or polycarboxylic acids and di or polyhydroxy alcohols or alkylene oxides. In an embodiment, the polyesters are a condensation product of ethylene glycol and a saturated carboxylic acid such as ortho or isophthalic acids and adipic acid. More preferably the polyesters include polyethyleneterphthalates produced by condensation of ethylene glycol and terephthalic acid; polybutyleneterephthalates produced by a condensations of 1,4-butanediol and terephthalic acid; and polyethyleneterephthalate copolymers and polybutyleneterephthalate copolymers which have a third component of an acid component such as phthalic acid, isophthalic acid, sebacic acid, adipic acid, azelaic acid, glutaric acid, succinic acid, oxalic acid, etc.; and a diol component such as 1,4-cyclohexanedimethanol, diethyleneglycol, propyleneglycol, etc. and blended mixtures thereof.

### B. Polyamide Polymer Blends

Suitable polyamide polymer blends for use as an oxygen barrier material may be found in U.S. Patent Nos. 5,814,384, 6,410,156, 6,423,776, and 6,479,160.

U.S. Patent No. 6,423,776 discloses a polyamide composition prepared by combining a polyamide homopolymer, copolymer, or blends thereof, and and oxidizable polydiene or polyether. The composition may also include a metal carboxylate salt catalyst and a nanoscale clay.

In an embodiment, the polyamide homopolymer or copolymer is selected from aliphatic polyamides and aliphatic/aromatic polyamides having a molecular weight of from about 10,000 to about 100,000. Useful aliphatic polyamide homopolymers include poly(4-aminobutyric acid) (nylon 4), poly(6-aminohexanoic acid) (nylon 6, also known as poly(caprolactam)), poly(7-aminoheptanoic acid) (nylon 7), poly(8-aminooctanoic acid)(nylon 8), poly(9-aminononanoic acid) (nylon 9), poly(10-aminodecanoic acid) (nylon 10), poly(11-aminoundecanoic acid) (nylon 11), ply(12-aminododecanoic acid) (nylon 12), poly(hexamethylene adipamide) (nylon 6,6), poly(hexamethylene sebacamide) (nylon 6,10), poly(heptamethylene pimelarnide) (nylon 7,7), poly(octamethylene suberamide) (nylon 8,8), poly(hexamethylene azelamide) (nylon 6,9), poly(nonamethylene azelamide) (nylon 9,9), poly(decamethylene azelamide) (nylon 10,9), poly(tetramethylene adipamide (nylon 4,6), caprolactam/hexamethylene adipamide copolymer (nylon 6,6/6), hexamethylene adipamide/caprolactam copolymer (nylon 6/6,6), trimethylene adipamide/hexamethylene azelaiamide copolymer (nylon trimethyl 6,2/6,2), hexamethylene adipamide-hexamethylene-azelaiamide caprolactam copolymer (nylon 6,6/6,9/6), poly(tetramethylenediamine-co-oxalic acid), (nylon 4,2), the polyamide of n-dodecanedioic acid and hexamethylenediamine (nylon 6,12), the polyamide of dodecamethylenediamine and n-dodecanedioic acid (nylon 12,12), as well as blends and copolymers thereof and other polyamides which are not particularly delineated here.

Of these polyamides, preferred polyamides include polycaprolactam, which is also commonly referred to as nylon 6, and polyhexamethylene adipamide, which is also commonly referred to as nylon 6,6, as well as mixtures of the same.

Exemplary of aliphatic/aromatic polyamides include poly (2,2,2-trimethyl hexamethylene terephthalamide), poly(m-xylylene adipamide) (MXD6), poly(p-xylylene adipamide), poly(hexamethylene terephthalamide) (nylon 6,T), poly(hexamethylene isophthalamide) (nylon 6, I), poly(dodecamethylene terephthalamide), polyamide 6T/6I, poly(tetramethylenediamine-co-isophthalic acid) (nylon 4,I), polyamide 6/MXDT/I, polyamide MXDI, hexamethylene adipamide/hexamethylene-isophthalamide (nylon 6,6/61), hexamethylene adipamide/hexamethyleneterephthalamide (nylon 6,6/6I) and as well as others which are not particularly delineated here. Blends of two or more aliphatic/aromatic polyamides and/or aliphatic polyamides can also be used.

The polyamide component is present in the overall composition in an amount of from about 80% to about 99.9% by weight, preferably from about 90% to about 99% and more preferably from about 95% to about 98%.

The polyamide composition of the current invention also contains a functional, polyamide compatible, oxidizable polydiene or polyether as an oxygen scavenger. Such oxygen scavengers are low molecular weight, stall particles which are compatible and uniformly dispersible in the polyamide.

Specific non-limiting examples of functional, oxidizable polydienes as suitable oxygen scavengers include epoxy functionalized polybutadiene (1,4 and/or 1,2), maleic anhydride grafted or copolymerized polybutadiene (1,4 and/or 1,2), epoxy functionalized polyisoprene, and maleic anhydride grafted or copolymerized polyisoprene.

Specific non-limiting examples of functional oxidizable polyethers as oxygen scavengers include amine, epoxy or anhydride functionalized polypropylene oxide, polybutylene oxide (2,3 or 1,2) and polystyrene oxide.

In an embodiment, the polyamide composition further comprises a metal fatty acid salt catalyst such as a low molecular weight metal carboxylate salt catalyst. Suitable metal fatty acid salt catalysts have a counterion which is an acetate, stearate, propionate, hexanoate, octanoate, benzoate, salicylate, and cinnamate or combination thereof. Preferably the metal fatty acid salt catalyst is a cobalt, copper or ruthenium, acetate, stearate, propionate, hexanoate, octanoate, benzoate, salicylate or cinnamate, or combinations thereof. The salt is present in the overall composition in an amount of from about 0% to about 1% by weight, preferably from about 0.001% to about 0.5% and more preferably from about 0.005% to about 0.1%. The most preferred range is from about 0.01% to about 0.05%.

### C. Inner layer-Polyolefin Fluid Contact Layer

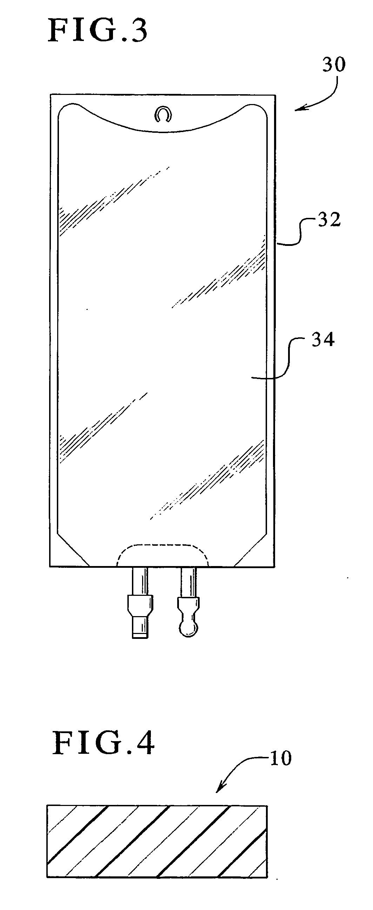

The fluid contact layer 16 of the multilayer films of the present invention shown in FIGS. 1 and 2, or as a monolayer film shown in FIG. 4, is made from a two-component blend of polyolefin polymers which are suitable for use in food applications and exhibit high impact strength when fabricated into a multilayer film.

The first component is selected from the group of: (1) ethylene and α-olefin interpolymers having a density of less than about 0.915 g/cc and selected from the group consisting of ultra low density polyethylenes very low density polyethylenes, ethylene - propylene rubbers, and ethylene-propylene-diene terpolymers, (2) ethylene and lower alkyl acrylate interpolymers, (3) ethylene and lower alkyl substituted alkyl acrylate interpolymers and (4) ionic polymers, commonly referred to as ionomers. The second component may be selected from the group consisting of: (1) propylene containing polymers, (2) butene containing polymers, (3) polymethyl pentene containing polymers, (4) cyclic olefin containing polymers and (5) bridged polycyclic hydrocarbon containing polymers. The film is capable of withstanding terminal steam sterilization without exposing the film to radiation or other cross-linking techniques. The first component has a first melting point temperature determined by differential scanning calorimetry (DSC) and the second component has a second melting point temperature determined by DSC that is higher than the first melting point temperature.

The film has a modulus of elasticity when measured in accordance with ASTM D882 of less than about 414 mPa (about 60,000 psi), an internal haze when measured in accordance with ASTM D1003 of less than about 25%, self adhesion ranking greater than about two (as defined below), slight or no adhesion to overpouch materials, has a sample creep at 120°C at about 186 KPa (about 27 psi) loading of less than or equal to 150%, and the film can be heat sealed into a container having seals wherein the seals remain intact when a liquid filled container is autoclaved at temperatures from about 100°C to about 121°C for one hour.

As used herein, the term "interpolymer" includes copolymers, terpolymers either random or block.

Suitable ethylene and α-olefin interpolymers have a density, as measured by ASTM D-792 of less than about 0.915 g/cc and include very low density polyethylene (VLDPE), and ultra low density ethylene (ULDPE) . The α-olefin should have from 3-17 carbons, more preferably from 4-12 and most preferably 4-8 carbons. In a preferred form of the invention, the ethylene and α-olefin copolymers are obtained using single site catalysts. Suitable single site catalyst systems, among others, are those disclosed in U.S. Patent Nos. 5,783,638 and 5,272,236. Suitable ethylene and α-olefin copolymers include those sold by Dow Chemical Company under the AFFINITY tradename, DuPont-Dow under the ENGAGE tradename and Exxon under the EXACT and PLASTOMER tradenames. However, suitable ethylene and α-olefin copolymers can also be provided using Ziegler-Natta type catalysts.

The term "lower alkyl acrylates" refers to comonomers having the formula set forth in Diagram 1:

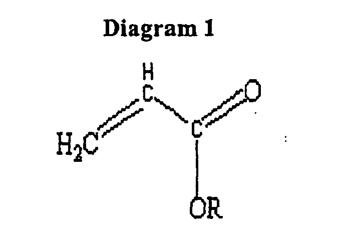

The R group refers to alkanes having from 1 to 17 carbons. Thus, the term "lower alkyl acrylates" includes but is not limited to methyl acrylate, ethyl acrylate, butyl acrylate, and the like.

The term "alkyl substituted alkyl acrylates" refers to comonomers having the formula set forth in Diagram 2:

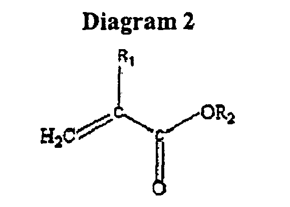

R₁ and R₂ are alkanes having 1-17 carbons and can have the same number of carbons or have a different number of carbons. Thus, the term "alkyl substituted alkyl acrylates" includes but is not limited to methyl methacrylate, ethyl methacrylate, methyl ethacrylate, ethyl ethacrylate, butyl methacrylate, butyl ethacrylate and the like.

Suitable homopolymer and copolymers of cyclic olefins and bridged polycyclic hydrocarbons and films thereof can be found in U.S. Patent Nos. 5,218,049, 5,854,349, 5,863,986, 5,795,945, 5,792,824; and European Patent numbers EP 0 291,208, EP 0 283,164, EP 0 497,567,

In a preferred form of the invention, suitable cyclic olefin monomers are monocyclic compounds having from 5 to about 10 carbons in the ring. The cyclic olefins can be selected from the group consisting of substituted and unsubstituted cyclopentene, cyclohexene, cycloheptene, and cyclooctene. Suitable substituents include lower alkyl, acrylate derivatives and the like.

In a preferred form of the invention, suitable bridged polycyclic hydrocarbon monomers have two or more rings and more preferably contain at least 7 carbons. The rings can be substituted or unsubstituted. Suitable substitutes include lower alkyl, aryl, aralkyl, vinyl, allyloxy, (meth) acryloxy and the like. The bridged polycyclic hydrocarbons are selected from the group consisting of those disclosed in the above incorporated patents and patent applications. Suitable bridged polycyclic hydrocarbon containing polymers are sold by Ticona under the tradename TOPAS, by Nippon Zeon under the tradenanie ZEONEX and ZEONOR, by Daikyo Gomu Seiko under the tradename CZ resin, and by Mitsui Petrochemical Company under the tradename APEL.

In a preferred form of the present invention, a monolayered film formed from one of the above blends will have the following physical characteristics: (1) a modulus of elasticity when measured in accordance with ASTM D882 of less than about 414 mPa (about 60,000 psi) (2) an internal haze when measured in accordance with ASTM D1003 of less than about 25%, (3) self adhesion ranking greater than about two as defined below, (4) essentially no adhesion to overpouch materials, (5) has a sample creep at 120°C at about 186 kPa (about 27 psi) loading of less than or equal to 150%, and (6) the film can be heat sealed into a container having seals wherein the seals remain intact when a liquid-filled container is autoclaved at 121°C for one hour.

The film is also sufficiently flexible to construct flowable material containers. The film has a modulus of elasticity of less than about 414 mPa (about 60,000 psi), more preferably less than about 276 mPa (about 40,000 psi), even more preferably less than about 207 mPa (about 30,000 psi) and most preferably less than about 138 mPa (about 20,000 psi) when measured in accordance with ASTM D-882. When the flowable material container is an I.V. container it is desirable the container collapse or substantially collapse upon draining, and, therefore, should have a modulus of elasticity of less than about 270 mPa (about 40,000 psi), more preferably less than about 207 mPa (about 30,000 psi) and even more preferably less than about 138 mPa (about 20,000 psi) when measured in accordance with ASTM D-882.

For the purposes of this invention, self-adhesion is defined as the tendency of the film to adhere to itself during autoclaving. This property can be determined with the following test. Film strips are cut 20.3cmX5.1cm (8" X 2"), with the larger dimension in the machine direction. These strips are rolled into 5.1 cm (2") long tubes approximately 1.3 cm (0.5" ) in diameter. The wound film is held in place by compressing the film layers together at one end with a paper clip. The tubes are then placed in a steam autoclave at 121°C for 30 minutes. The samples are allowed to cool for at least one hour. The film is then unwound. The resistance to unwinding and relative damage to the film is ranked as shown in Table 1 as follows:

**TABLE 1**

| RANK | OBSERVED RESULT |
|---|---|
| (1) | The film cannot be unwound without destroying the film. |
| (2) | The film is difficult to peel and significant surface damage results. |
| (3) | Some resistance to peeling and minor surface damage are noted. |
| (4) | Slight resistance to peeling noted with little or no surface damage. |
| (5) | No peel resistance and no surface damage noted, |

Ranks are determined by three or more individuals and recorded as an average.

Adhesion to overpouch materials is determined by the following qualitative test. One inch wide strips of film are sealed into typical over pouch bags (medium or high density polyethylene)_{.} The over pouch bag is then placed into a laboratory autoclave at 122° (252°F) and 270°2 KPa (24.5 psig gauge) pressure for one hour. After autoclaving, the bags are cut open and the strips removed. If the films separate from the over pouch without leaving damage marks on the film surface, a ranking of no adhesion (N) is given. If the film separation produces visible damage, a ranking is given (Y) indicating that tack to the over pouch is present. A ranking to indicate slight adhesion (S) can also be given.

Creep properties were determined at 120°C by clamping film strips having a thickness from about 0·13mm (about 5 mils) to about 0·38mm (about 15 mils) in a temperature controlled oven and loading with weights to produce a stress of about 186 KPa (about 27 psi). After loading for 40 minutes, the film strips were removed and the dimensional changes in a pre-marked one inch gap were recorded.

The film is capable of being sealed using standard heat sealing techniques. An adequate heat seal is formed when a fluid container, such as the one shown in FIG. 3, is fabricated from the film by sealing peripheral edges to define a centrally disposed fluid chamber. The container is filled with water and subjected to a standard autoclave sterilization process. Adequate heat seals remain intact upon completion of the autoclave cycle.

The films of the present invention have a haze of less than about 25% and most preferably less than about 15% when measured in accordance with ASTM D1003. For the purposes of this invention, internal haze is defined as the haze value measured when both film surfaces have been wetted with isopropyl alcohol.

The first component is present in an amount by weight of the polymer blend from 1% to about 60%, more preferably from 5%-60% and more preferably from about 10% to about 50%

The first component can be a single ethylene-containing polymer or a blend of two or more ethylene containing polymers which in sum constitute by weight the ranges set forth for the first component. The melting point temperature of such a blend will show a single distinct composite melting point or a peak for each ethylene-containing polymer of the blend or a combination of the same.

Suitable ethylene-containing polymers include those selected from the group consisting of ethylene homopolymers and ethylene copolymers set forth above. Suitable ethylene and α-olefin copolymers will have a density of less than about 0.915 g/cc, more preferably less than about 0.905 g/cc, and most preferably less than about 0.900 g/cc. Suitable polymers include, but are not limited to, ultra low-density polyethylene (ULDPE), ethylene-propylene rubber (EPR), and ethylene propylene diene terpolymer (EPDM). Preferably, the ethylene-containing polymers are those sold by Dow Chemical Company under the AFFINITY tradename, most preferably Affinity PL 1880 and VP 8770, and by DuPont-Dow under the ENGAGE tradename, most preferably Engage 8003.

The second component will constitute the remaining weight-percent portion of the blends and will be present singularly or in sum the converse weight percentage ranges from those set forth above for the first component. Accordingly, if the first component is present from about 99% to about 40%, the second component or the sum of the additional components will be the converse or from about 5% to about 50%.

The second component may be a single propylene-containing polymer or a single methyl-pentene-containing polymer. The second component can also be a blend of two or more propylene-containing polymers, two or more methyl-pentene-containing polymers or a blend of at least one propylene-containing polymer and at least one methyl-pentene-containing polymer.

Suitable propylene-containing polymers include those selected from the group consisting of homopolymers of polypropylene, copolymers and terpolymers of propylene with one or more comonomers selected from α-olefin heaving from 2-18 carbons. Suitable polypropylene copolymers and terpolymers include random or block propylene and ethylene copolymers or random or block propylene/ethylene/butene terpolymers. Suitable propylene and α-olefin copolymers are sold by Basell under the tradename PRO FAX, preferably PRO FAX SA-861 and by Exxon as Exxon PP3505GB1. In a preferred form of the invention, the second component will have a distinct melting point temperature, a distinct composite melting point temperature or a melting point temperature associated with each of the sub-components of the second component, or a combination of the same, determined by DSC of equal to or higher than about 135°C. Further, in a preferred form of the invention the first component will have a modulus of elasticity of less than about 1,379 mPa (about 200,000 psi), more preferably less than about 1.034 mPa (about 150,000 psi), and most preferably less than about 689 mPa (about 100,000 psi).

It may also be desirable to use a high melt strength polypropylene. High melt strength polypropylenes can be a homopolymer or copolymer of polypropylene having a melt flow index within the range of 10 grams/10 min. to 800 grams/10 min., more preferably 30 grams/10 min. to 200 grams/10 min, or any range or combination of ranges therein. High melt strength polypropylenes are known to have free-end long chain branches of propylene units. Methods of preparing polypropylenes which exhibit a high melt strength characteristic have been described in U.S. Pat. Nos. 4,916,198; 5,047,485; and 5,605,936. One such method includes irradiating a linear propylene polymer in an environment in which the active oxygen concentration is about 15% by volume with high energy ionization energy radiation at a dose of 1 to 10⁴ megarads per minute for a period of time sufficient for a substantial amount of chain scission of the linear propylene polymer to occur but insufficient to cause the material to become gelatinous. The irradiation results in chain scission. The subsequent recombination of chain fragments results in the formation of new chains, as well as joining chain fragments to chains to form branches. This further results in the desired free-end long chain branched, high molecular weight, non-linear, propylene polymer material. Radiation is maintained until a significant amount of long chain branches form. The material is then treated to deactivate substantially all the free radicals present in the irradiated material.

High melt strength polypropylenes can also be obtained as described in U.S. Patent No. 5,416,169, when a specified organic peroxide (di-2-ethylhexyl peroxydicarbonate) is reacted with a polypropylene under specified conditions, followed by melt-kneading. Such polypropylenes are linear, crystalline polypropylenes having a branching coefficient of substantially 1, and, therefore, has no free end long-chain branching and will have a intrinsic viscosity of from about 2.5 dl/g to 10 dl/g.

The present invention further contemplates utilizing polypropylene polymers obtained in a process using Ziegler-Natta and more preferably single-site and metallocene catalysts.

The present invention also contemplates using blends of propylene containing polymers as the second component of the film. In a preferred form of the invention the blends include at least a first propylene containing polymer and a second propylene containing polymer. The first propylene containing polymer and the second propylene containing polymer can be selected from the propylene homopolymer, copolymers and terpolymers set forth above. In a preferred form of the invention the first propylene containing polymer differs from the second propylene containing polymer in at least one of two ways. The first difference is the first propylene containing polymer preferably should have a melt flow rate of from about 3 times greater and more preferably from about 5 times greater than the melt flow rate of the second propylene containing polymer. The second difference is the first propylene-containing polymer preferably has a melting point from at least about 5°C higher and more preferably from at least about 10°C higher than that of the second propylene containing polymer. The melting point is measured in accordance with ASTM D3417 (Enthalpies of Fusion and Crystallization of Polymers by Differential Scanning Calorimetry). The first propylene containing polymer can differ from the second propylene containing polymer by the first difference, by the second difference or by both.

Suitable methylpentene-containing polymers include homopolymers of 4-methylpentene-1; copolymers and terpolymers of methylpentene with one or more comonomers selected from α-olefins having from 2-18 carbons. A preferred methylpentene-containing polymer is sold by Mitsui Petrochemical, Ltd. under the tradename TPXJ.

In a preferred form of the invention, the first component will constitute what is known as the continuous phase and the second component or other additional components will constitute a dispersed phase or dispersed phases as the case may be.

It is also contemplated additional polymer processing components can be added to the blends of the present invention. For example, it may be desirable to add a fatty acid amide or diatomaceous earth. Suitable fatty amides include those derived from fatty acids having from 10 to 30 carbons and most preferably is derived from erucic acid.

The second polymer blend can be fabricated into a monolayer film using standard polymer processing techniques such as extrusion.

As used herein, the term "interpolymer" includes copolymers, terpolymers either random or block.

### D. Tie Layers

Suitable tie layers, described in U.S. Patent No. 6,083,587, include modified polyolefins blended with unmodified polyolefins. The modified polyolefins are typically polyethylene or polyethylene copolymers. The polyethylenes can be ultra low density polyethylene (ULDPE), low density polyethylene (LDPE), linear low density polyethylene (LLDPE), medium density polyethylene (MDPE), and high density polyethylenes (HDPE). The modified polyethylenes may have a density from 0.850-0.95 g/cc.

The polyethylene may be modified by grafting with carboxylic acids, and carboxylic anhydrides. Suitable grafting monomers include, for example, maleic acid, fumaric acid, itaconic acid, citraconic acid, allylsuccinic acid, cyclohex-4-ene-1,2-dicarboxylic acid, 4-methylcyclohex-4-ene-1,2-dicarboxylic acid, bicyclo[2.2.1]hept-5-ene-2,3-dicarboxylic acid, x-methylbicyclo[2.2.1]hept-5-ene-2,3-dicarboxylic acid, maleic anhydride, itaconic anhydride, citraconic anhyride, allylsuccinic anhydride, citraconic anhydride, allylsuccinic anhydride, cyclohex-4-ene-1,2-dicarboxylic anhydride, 4-methylcyclohex-4-ene-1,2-dicarboxylic anhydride, bicyclo[2.2.1]hept-5-ene2,3-dicarboxylic anhydride, and x-methylbicyclo[2.2.1]hept-5-ene-2,2-dicarboxylic anhydride.

Examples of other grafting monomers include C₁-C₈ alkyl esters or glycidyl ester derivatives of unsaturated carboxylic acids such as methyl acrylate, methyl methacrylate, ethyl acrylate, ethyl methacrylate, butyl acrylate, butyl methacrylate, glycidyl acrylate, glycidal methacrylate, monoethyl maleate, diethyl maleate, monomethyl maleate, diethyl maleate, monomethyl fumarate, dimethyl fumarate, monomethyl itaconate, and diethylitaconate; amide derivatives of unsaturated carboxylic acids such as acrylamide, methacrylamide, maleicmonoamide, maleic diamide, maleic N-monoethylamide, maleic N,N-dietylamide, maleic N-monobutylamide, maleic N,N dibutylamide, fumaric monoamide, fumaric diamide, fumaric N-monoethylamide, fumaric N,N-diethylamide, fumaric N-monobutylamide and fumaric N,N-dibutylamide; imide derivatives of unsaturated carboxylic acids such as maleimide, N-butymaleimide and N-phenylmaleimide; and metal salts of unsaturated carboxylic acids such as sodium acrylate, sodium methacrylate, potassium acrylate and potassium methacrylate. More preferably, the polyolefin is modified by a fused ring carboxylic anhydride and most preferably a maleic anhydride.

The unmodified polyolefins can be selected from the group consisting of ULDPE, LLDPE, MDPE, HDPE and polyethylene copolymers with vinyl acetate and acrylic acid. Suitable modified polyolefin blends are sold, for example, by DuPont under the tradename BYNEL, by Chemplex Company under the tradename PLEXAR, and by Quantum Chemical Co. under the tradename PREXAR.

### II. Polymer and Film Processing

The above polymer blends may be processed into a layered structure by standard techniques well known to those of ordinary skill in the art. One processing method which may be employed is a blown film extrusion and water quench process wherein the films are extruded at high temperatures. Another processing method which may be employed is a blown film extrusion and air quench process wherein the films are extruded at high temperatures. In this process, the inner tube is sterilized from the high temperature extrusion, and filtered clean or sterilized air is used to inflate the tube. Sections of the tube are then sealed to form containers for food applications. The air in the tube is expelled before the containers are sealed on both sides. There is no contamination to the inner portion of the container prior to production since both sides of tube are sealed. This ensures that sterilized food product will not be contaminated by the containers of the present invention, which will additionally make the containers of the present invention suitable for aseptic packaging applications.

The films may also be prepared using, for example, extrusion, coextrusion, extrusion coating, blown film extrusion, cast extrusion, calendaring, lamination, blow molding or other processes that are well known in the art.

### III. Fluid Containers

The multilayer films described above are suitable for fabricating large food containers to be used in retort heating applications. Food containers made with the films of the present invention maintain high impact strength after heat treatment, and are able to further withstand subsequent freezing and microwave heating without failure.

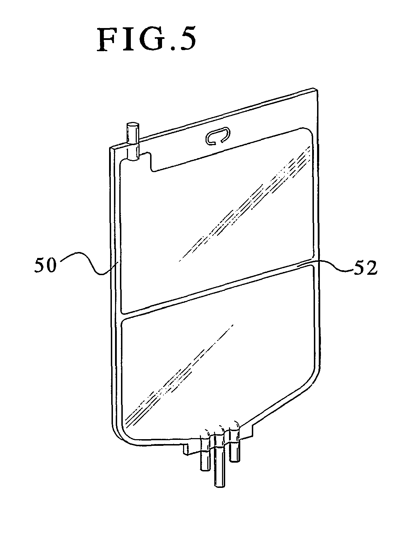

FIG. 3 shows a container **30** made with the multilayer films of FIGS. 1, 2 or monolayer film of FIG. 4. The container **30** is heat sealed along a peripheral edge **32** of the container to define a centrally disposed chamber **34** for fluid, or semi-solid food products. These films may also be used to fabricate a multiple chamber container (FIG. 5) having a peelable seal **52** separating the chambers and a permanent seal **50** about the periphery. Such peel seal containers are disclosed in U.S. Patent Application Publication No. 2002/0115795 .

The polyolefin fluid contact layer **16** of the present invention is capable of being heat sealed using standard heat sealing techniques. An adequate heat seal is formed when a container, such as the one shown in FIG. 3, is fabricated from the film by sealing peripheral edges to define a centrally disposed fluid chamber. The container is filled with water and subjected to a standard retort sterilization process. Adequate heat seals remain intact upon completion of the retort cycle. The films of the present invention can be fabricated into a container and filled by form, fill and seal processes that are well known in the art.

The polyolefin fluid contact layer described above imparts significant impact resistance to containers made with the multilayer films of the present invention. The multilayer films of the current invention when made into sealed pouches holding up to 6.5 liters are able to withstand an impact strength of 2.44 m (8 feet) whithout failure.

### IV. Physical Properties

### A. Impact Strength

One of the problems associated with institutional-sized plastic containers for packaging liquid or semi-liquid materials is their inability to withstand impact forces following heat sterilization. The heat weakens the seals and the hydraulic forces on dropping creates high stresses in the horizontal direction. Thus, an essential property of each pouch or container is that it is capable of withstanding impacts during handling and transport. The industry has developed a number of tests for determining the suitability of the pouches and containers for shipping in cases; two of which are ASTM and NSTA standards. In addition, it has been found that drop tests on individual pouches provides a reliable test for qualitatively determining the impact strength of pouches. These tests involve multiple drops of each pouch before retorting.

The containers made with the polymer films of the present invention can withstand a impact strength from 2.44m (8 feet) for a 6 liter container without failure.

### B. High and low temperature performance

The flowable materials container of the present invention can be subjected to - 20°C conditions without becoming too brittle and can be heated, such as through the use of a microwave oven, to 100°C. The container can also be subjected to an autoclave sterilization process where the film or container of the present invention is subjected to 121°C for one hour.

### C. Film Thickness

The relative thickness of the layers of the structure 10 is for example as follows for a 6.5L volume container: the core layer should have a thickness from 0.09mm (3.5 mil), to about 0.14 mm (about 5.5 mil) or any range or combination of ranges therein. The outer layer preferably has a thickness from 0·01 mm (about 0.5) to 0·06 mm (about 2.5 mil), or any range or combination of ranges therein. The inner layer 16 has a thickness from 0·01 mm (about 0.5 mil) to 0·06 mm (about 2.5 mil) or any range or combination of ranges therein.

### D. Film and Container Sterilization

The films and containers herein are capable of being sterilized using numerous techniques including terminal steam sterilization, exposure to radiation, and exposure to ethylene oxide. Terminal sterilization typically includes exposing the film or container to steam at a temperature higher than 100°C, typically 121°C, but also includes up to 130°C. Typically, terminal sterilization utilizes steam at 121°C for time periods of from 30 minutes to 1 hour.

While specific embodiments have been illustrated and described, numerous modifications come to mind without departing from the scope of protection is only limited by the scope of the accompanying claims.

## Claims

1. A monolayer film comprising:
a polymer blend of a first component selected from the group consisting of (1) ethylene and α-olefin interpolymers having a density of less than about 0.915 g/cc, (2) interpolymers of methylene and lower alkyl acrylate monomers having the formula. 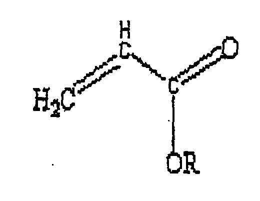
wherein R is an alkyl group having from 1 to 17 carbon atoms, (3) interpolymers of ethylene and lower alkyl substituted alkyl acrylate monomers having the formula: 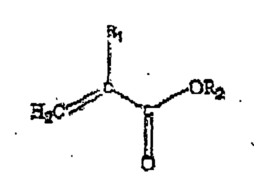 wherein R₁ and R₂ are each independently an alkyl group having from 1 to 17 carbon atoms and (4) ionomers, the first component present in an amount by weight of the film from about 60% to about %, the first component having a first melting point temperature determined by DSC, a second component selected from the group consisting of propylene containing polymers and methyl pentene containing polymers, the second component being present in an amount by weight of the film from about 99% to about 40%, the second component having a second melting point temperature determined by DSC; and the film being capable of withstanding steam sterilization at a temperature from about 100°C to about 130°C.

2. The film of Claims 1, wherein the second melting point temperature is higher than the first melting point temperature.

3. The film of Claim 1 or 2, wherein the ethylene containing polymer is obtained using a catalyst selected from the group consisting of Ziegler-Natta and single-site.

4. The film of any one of Claims 1 to 3, wherein the ethylene containing polymer is selected from the group consisting of ethylene homopolymers, and ethylene copolymers.

5. The film of any one of the preceding claims further comprising an oxygen scavenger.

6. The film of any one of the preceding claims which is capable of withstanding steam sterilization of 121°C for one hour.

7. A multi-layer film comprising:
a barrier layer,
a seal layer of a polymer blend of a first component selected from the group consisting of (1) ethylene and α-olefin interpolymers having a density of less than about 0.915 g/cc, (2) interpolymers of ethylene and lower alkyl acrylate monomers having the formula: 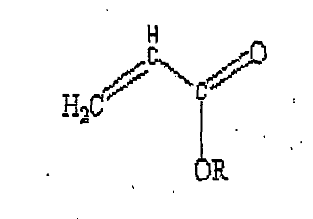
where R is an alkyl group having from 1 to 17 carbon atoms, (3) interpolymers of ethylene and lower alkyl substituted alkyl acrylate monomers having the formula:, 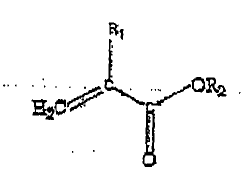 where R₁ and R₂ are each independently an alkyl group having from 1 to 17 carbon atoms and (4) ionomers, the first component present in an amount by weight of the film from about 60% to bout 1%, the first component having a first melting point temperature determined by DSC, a second component selected from the group consisting of propylene containing polymers and methyl pentene containing polymers, the second component being present in an amount by weight of the film from about 99% to about 40%, the second components having a second melting point temperature determined by DSC; and wherein the film can be heat sealed into a container having seals wherein the seals remain intact when the container is retorted at 121°C for one hour, and wherein the container does not rupture when dropped from 2·44mm (8 feet).

8. A multi-layer film comprising:
a barrier layer;
a seal layer comprising a blend of: (i) ethylene and α-olefin interpolymers having a density of less than about 0.915 g/cc and in an amount of from about 60% to about 1% by weight of the blend, and (ii) a propylene containing polymer in an amount by weight of the blend from about 99% to about 40%; and
wherein the film can be heat sealed into a container having seals wherein the seals remain intact when the container is retorted at 121°C for one hour, and wherein the container does not rupture when dropped from 2·44m (8 feet).

9. The film of Claim 8 wherein the α-olefin has from 3 to 17 carbons.

10. The film of Claim 9, wherein the α-olefin has from 4 to- 9 carbons.

11. The film of any one of Claims 8 to 10, wherein the ethylene and α-olefin copolymer is obtained using a single site catalyst.

12. The film of any one of Claims 7 to 11, wherein the seal layer blend further comprises an oxygen scavenger.

13. The film of any one of claims 7 to 12, wherein the barrier layer contains a barrier material selected from the group consisting of polyamides and ethylene vinyl alcohol copolymers.

14. The film of claim 13, wherein the barrier layer blend further comprises an oxygen scavenger.

15. The film of claim 5, 12 or 14, wherein the oxygen scavenger is an oxidizable polydiene.

16. The film of claim 5, 12 or 14, wherein the oxygen scavenger is an oxidizable polyether.

17. The film of any one of claims 7 to 16, wherein the barrier layer further comprises a metal fatty acid salt.

18. The film of any one of claims 7 to 17, wherein the film further comprises a tie layer adhering the barrier layer to the inner layer.

19. The film of any one of the preceding claims, wherein the propylene containing polymer is selected from the group consisting, of propylene homopolymers and propylene copolymers.

20. The film of claim 19, wherein the propylene containing polymer is obtained using a catalyst selected from the group consisting of Ziegler-Natta and single-site.

21. The film of any one of the preceding claims, wherein the propylene containing polymer is a high melt strength polymer having a melt flow rate of from 10g/10min to 800g/10min.

22. The film of any one of the preceding claims, wherein the propylene containing polymer is a blend of a first propylene containing polymer and a second propylene containing polymer.

23. The film of claim 22, wherein the first propylene containing polymer has a first melt flow rate and the second propylene containing polymer has a second melt flow rate and wherein the first melt flow rate is higher than the second melt flow rate.

24. The film of claim 23, wherein the first melt flow rate is about 3 times greater than the second melt flow rate.

25. The film of claim 23, wherein the first melt flow rate is about 5 times greater than the second melt flow rate.

26. The film of any one of claims 22 to 25, wherein the first propylene containing polymer has a first melting point temperature and the second propylene containing polymer has a second melting point temperature and wherein the first melting point temperature is higher than the second melting point temperature by at least about 5°C.

27. The film of claim 26, wherein the first melting point temperature is higher than the second melting point temperature by at least about 10°C.

28. The film of any one of the preceding claims which is capable of being sterilized by exposure to radiation and by exposure to ethylene oxide.

29. The film of any one of the preceding claims, wherein the film surface is non-sticky after beating at 121°C.

30. The film of any one of the preceding claims which is capable of forming a peel seal to form a multiple chambered container.

31. The film of any one of the preceding claims which is capable of forming a permanent seal to form a multiple chambered container.

32. A container having a wall made of a film as claimed in any one of claims 1 to 31, the container having an impact strength sufficient to withstand a drop from a height of 2.44m (8 feet) without rupturing.

33. A multiple chamber container having a prelable seal separating the chambers and a permanent seal about the periphery, the container comprising a film as defined in claim 1, 7 or 8.

34. The container of claim 32 or 33 which can withstand freezing at -20°C and microwave oven heating at 100°C.

## Patentansprüche

1. Monoschichtfolie, umfassend:
eine Polymermischung einer ersten Komponente, ausgewählt aus der Gruppe, bestehend aus (1) Ethylen und α-Olefin-Copolymeren mit einer Dichte von weniger als etwa 0,915 g/cm³, (2) Copolymeren von Ethylen und Niederalkylacrylatmonomeren mit der Formel 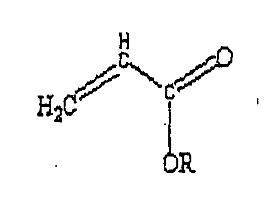
wobei R eine Alkylgruppe mit 1 bis 17 Kohlenstoffatomen ist, (3) Copolymeren von Ethylen und niederalkylsubstituierten Alkylacrylatmonomeren mit der Formel 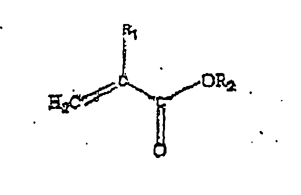 wobei R₁ und R₂ jeweils unabhängig eine Alkylgruppe mit 1 bis 17 Kohlenstoffatomen sind, und (4) Ionomeren,
wobei die erste Komponente in einer Menge, bezogen auf das Gewicht der Folie, von etwa 60% bis etwa 1% vorliegt, wobei die erste Komponente eine erste durch DSC bestimmte Schmelztemperatur aufweist,
eine zweite Komponente, ausgewählt aus der Gruppe, bestehend aus Propylen enthaltenden Polymeren und Methylpenten enthaltenden Polymeren, wobei die zweite Komponente in einer Menge, bezogen auf das Gewicht der Folie, von etwa 99% bis etwa 40% vorliegt, wobei die zweite Komponente eine zweite durch DSC bestimmte Schmelztemperatur aufweist,
und wobei die Folie befähigt ist, Dampfsterilisation bei einer Temperatur von etwa 100°C bis etwa 130°C zu widerstehen.

2. Folie nach Anspruch 1, wobei die zweite Schmelztemperatur höher als die erste Schmelztemperatur ist.

3. Folie nach Anspruch 1 oder 2, wobei das Ethylen enthaltende Polymer durch Verwendung eines Katalysators, ausgewählt aus der Gruppe, bestehend aus Ziegler-Natta und Single-Site erhalten wird.

4. Folie nach einem der Ansprüche 1 bis 3, wobei das Ethylen enthaltende Polymer ausgewählt ist aus der Gruppe, bestehend aus Ethylenhomopolymeren und Ethylencopolymeren.

5. Folie nach einem der vorhergehenden Ansprüche, weiter umfassend einen Sauerstoffaufnehmer bzw -fänger.

6. Folie nach einem der vorhergehenden Ansprüche, welche befähigt ist, Dampfsterilisation von 121°C für eine Stunde zu widerstehen.

7. Mehrschichtfolie, umfassend:
eine Barriereschicht,
eine Versiegelungsschicht einer Polymermischung einer ersten Komponente, ausgewählt aus der Gruppe, bestehend aus (1) Ethylen und α-Olefin-Copolymeren mit einer Dichte von weniger als etwa 0,915 g/cm³, (2) Copolymeren von Ethylen und Niederalkylacrylatmonomeren mit der Formel 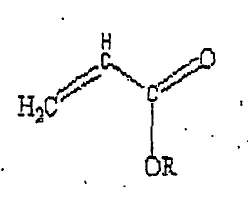
wobei R eine Alkylgruppe mit 1 bis 17 Kohlenstoffatomen ist, (3) Copolymeren von Ethylen und niederalkylsubstituierten Alkylacrylatmonomeren mit der Formel 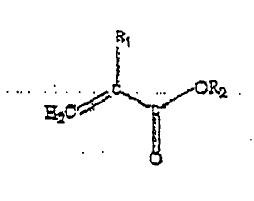 wobei R₁ und R₂ jeweils unabhängig eine Alkylgruppe mit 1 bis 17 Kohlenstoffatomen sind, und (4) Ionomeren,
wobei die erste Komponente in einer Menge, bezogen auf das Gewicht der Folie, von etwa 60% bis etwa 1 % vorliegt, wobei die erste Komponente eine erste durch DSC bestimmte Schmelztemperatur aufweist,
einer zweiten Komponente, ausgewählt aus der Gruppe, bestehend aus Propylen enthaltenden Polymeren und Methylpenten enthaltenden Polymeren, wobei die zweite Komponente in einer Menge, bezogen auf das Gewicht der Folie, von etwa 99% bis etwa 40% vorliegt, wobei die zweite Komponente eine zweite durch DSC bestimmte Schmelztemperatur aufweist, und
wobei die Folie in einen bzw. zu einem Behälter mit Siegeln wärmeversiegelt werden kann, wobei die Siegel intakt bleiben, wenn der Behälter bei 121°C für eine Stunde in einer Retorte erwärmt wird, und wobei der Behälter nicht reißt bzw. bricht, wenn er aus 2,44 m (8 Fuß) fallen gelassen wird.

8. Mehrschichtfolie, umfassend:
eine Barriereschicht,
eine Versiegelungsschicht, umfassend eine Mischung von (i) Ethylen und α-Olefin-Copolymeren mit einer Dichte von weniger als etwa 0,915 g/cm³ und in einer Menge von etwa 60% bis etwa 1%, bezogen auf das Gewicht der Mischung, und (ii) ein Propylen enthaltendes Polymer in einer Menge, bezogen auf das Gewicht der Mischung, von etwa 99% bis etwa 40%, und
wobei die Folie in einen Behälter mit Siegeln wärmeversiegelt werden kann,
wobei die Siegel intakt bleiben, wenn der Behälter bei 121°C für eine Stunde in einer Retorte erwärmt wird, und wobei der Behälter nicht reißt, wenn er aus 2,44 m (8 Fuß) fallen gelassen wird.

9. Folie nach Anspruch 8, wobei das α-Olefin 3 bis 17 Kohlenstoffe aufweist.

10. Folie nach Anspruch 8, wobei das α-Olefin 4 bis 8 Kohlenstoffe aufweist.

11. Folie nach einem der Ansprüche 8 bis 10, wobei das Ethylen und α-Olefin-Copolymer durch Verwendung eines Single-site-Katalysators erhalten wird.

12. Folie nach einem der Ansprüche 7 bis 11, wobei die Versiegelungsschichtmischung weiter einen Sauerstoffaufnehmer umfasst.

13. Folie nach einem der Ansprüche 7 bis 12, wobei die Barriereschicht ein Barrierematerial enthält, ausgewählt aus der Gruppe, bestehend aus Polyamiden und Ethylenvinylalkohol-Copolymeren.

14. Folie nach Anspruch 13, wobei die Barriereschichtmischung weiter einen Sauerstoffaufnehmer aufweist.

15. Folie nach Anspruch 5, 12 oder 14, wobei der Sauerstoffaufnehmer ein oxidierbares Polydien ist.

16. Folie nach Anspruch 5, 12 oder 14, wobei der Sauerstoffaufnehmer ein oxidierbarer Polyether ist.

17. Folie nach einem der Ansprüche 7 bis 16, wobei die Barriereschicht weiter ein Metallsalz einer Fettsäure umfaßt.

18. Folie nach einem der Ansprüche 7 bis 17, wobei die Folie weiter eine Bindeschicht umfaßt, welche die Barriereschicht an die innere Schicht anhaftet.

19. Folie nach einem der vorhergehenden Ansprüche, wobei das Propylen enthaltende Polymer ausgewählt ist aus der Gruppe, bestehend aus Propylenhomopolymeren und Propylencopolymeren.

20. Folie nach Anspruch 19, wobei das Propylen enthaltende Polymer durch Verwendung eines Katalysators, ausgewählt aus der Gruppe, bestehend aus Ziegler-Natta und Single-site erhalten wird.

21. Folie nach einem der vorhergehenden Ansprüche, wobei das Propylen enthaltende Polymer ein Polymer mit einer hohen Schmelzenstabilität ist, welches eine Schmelzrate von 10 g/10 min bis 800 g/10 min aufweist.

22. Folien nach einem der vorhergehenden Ansprüche, wobei das Propylen enthaltende Polymer eine Mischung aus einem ersten Propylen enthaltende Polymer und einem zweiten Propylen enthaltenden Polymer ist.

23. Folie nach Anspruch 22, wobei das erste Propylen enthaltende Polymer eine erste Schmelzrate aufweist und das zweite Propylen enthaltende Polymer eine zweite Schmelzrate aufweist, und wobei die erste Schmelzrate höher ist als die zweite Schmelzrate.

24. Folie nach Anspruch 23, wobei die erste Schmelzrate etwa dreimal größer als die zweite Schmelzrate ist.

25. Folie nach Anspruch 23, wobei die erste Schmelzrate etwa fünfmal größer als die zweite Schmelzrate ist.

26. Folie nach einem der Ansprüche 22 bis 25, wobei das erste Propylen enthaltende Polymer eine erste Schmelztemperatur aufweist und das zweite Propylen enthaltende Polmyer eine zweite Schmelztemperatur aufweist, und wobei die erste Schmelztemperatur um mindestens etwa 5°C höher als die zweite Schmelztemperatur ist.

27. Folie nach Anspruch 26, wobei die erste Schmelztemperatur um mindestens etwa 10°C höher als die zweite Schmelztemperatur ist.

28. Folie nach einem der vorhergehenden Ansprüche, welche befähigt ist, durch Aussetzen einer Strahlung und durch Aussetzen von Ethylenoxid sterilisiert zu werden.

29. Folie nach einem der vorhergehenden Ansprüche, wobei die Folienoberfläche nach Erwärmen bei 121°C nicht klebrig ist.

30. Folie nach einem der vorhergehenden Ansprüche, welche befähigt ist, eine Ablöseversiegelung zu bilden, um einen Mehrkammerbehälter zu bilden.

31. Folie nach einem der vorhergehenden Ansprüche, welche befähigt ist, eine Permanentversiegelung zu bilden, um einen Mehrkammerbehälter zu bilden.

32. Behälter mit einer Wand, welche aus einer wie in einem der Ansprüche 1 bis 31 definierten Folie hergestellt ist, wobei der Behälter eine Schlagfestigkeit aufweist, welche ausreicht, einem Fall aus einer Höhe von 2,44 m (8 Fuß) zu widerstehen ohne zu reißen.

33. Mehrkammerbehälter mit einer ablösbaren Versiegelung, welche die Kammern trennt, und einer Permanentversiegelung um die Peripherie, wobei der Behälter eine wie in Anspruch 1, 7 oder 8 definierte Folie umfaßt.

34. Behälter nach Anspruch 32 oder 33, welcher Gefrieren bei -20°C und Erwärmen im Mikrowellenofen auf 100°C widersteht.

## Revendications

1. Film monocouche comprenant :
un mélange de polymère d'un premier composant choisi dans le groupe constitué de (1) éthylène et d'interpolymères d'α-oléfines ayant une densité inférieure à environ 0,915 g/cc, (2) des interpolymères d'éthylène et de monomères d'acrylate d'alkyle inférieur ayant la formule : 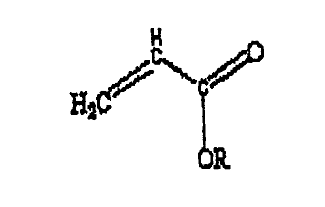
où R est un groupe alkyle ayant 1 à 17 atomes de carbone, (3) des interpolymères d'éthylène et des monomères d'acrylate d'alkyle substitué d'alkyle inférieur ayant la formule : 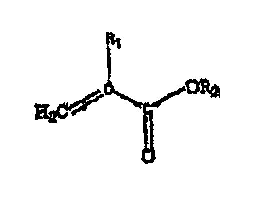 où R₁ et R₂ sont chacun indépendamment un groupe alkyle ayant de 1 à 17 atomes de carbone et (4) des ionomères, le premier composant présent dans une quantité en poids du film d'environ 60% à environ 1%, le premier composant ayant une première température de point de fusion déterminée par DSC, un second composant choisi dans le groupe constitué de polymères contenant du propylène et de polymères contenant du pentène de méthyle, le second composant étant présent dans une quantité en poids du film d'environ 99% à environ 40%, le second composant ayant une seconde température de point de fusion déterminée par DSC ; et le film étant capable de résister à une stérilisation à la vapeur à une température comprise entre environ 100°C et environ 130°C.

2. Film selon la revendication 1, dans lequel la seconde température de point de fusion est supérieure à la première température de point de fusion.

3. Film selon les revendications 1 ou 2, dans lequel le polymère contenant de l'éthylène est obtenu en utilisant un catalyseur choisi dans le groupe constitué d'un catalyseur Ziegler-Natta et d'un catalyseur à site unique.

4. Film selon l'une quelconque des revendications 1 à 3, dans lequel le polymère contenant de l'éthylène est choisi dans le groupe constitué d'homopolymères d'éthylène et de copolymères d'éthylène.

5. Film selon l'une quelconque des revendications précédentes, comprenant en outre un capteur d'oxygène.

6. Film selon l'une quelconque des revendications précédentes qui est capable de résister à une stérilisation à la vapeur de 121°C pendant une heure.

7. Film multi-couches comprenant :
une couche barrière ;
une couche de joint constituée d'un mélange de polymère d'un premier composant, choisi dans le groupe constitué de (1) éthylène et d'interpolymères d'αoléfine, ayant une densité inférieure à environ 0,915 g/cc, (2) d'interpolymères d'éthylène et de monomères d'acrylate d'alkyle inférieur ayant la formule : 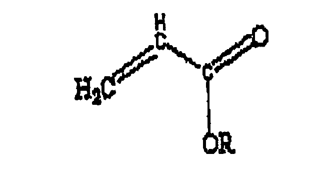
où R est un groupe alkyle ayant un groupe alkyle ayant de 1 à 17 atomes de carbone, (3) des interpolymères d'éthylène et de monomères d'acrylate d'alkyle substitué en alkyle inférieur ayant la formule : 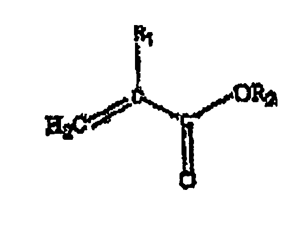 où R₁ et R₂ sont chacun indépendamment un groupe alkyle, ayant de 1 à 17 atomes de carbone et (4) des ionomères, le premier composant présent dans une quantité en poids du film d'environ 60% à environ 1%, le premier composant ayant une première température de point de fusion déterminée par DSC, un second composant choisi dans le groupe constitué de polymères contenant du propylène, et des polymères contenant un pentène de méthyle, le second composant étant présent dans une quantité en poids du film d'environ 99% à environ 40%, le second composant ayant une seconde température de point de fusion déterminée par DSC, et dans lequel le film peut être thermo-scellé dans un récipient ayant des joints, dans lequel les joints restent intacts quand le récipient est re-chauffé à 121°C pendant une heure ; et dans lequel le récipient ne se rompt pas en cas de chute de 2,44 m (8 pieds).

8. Film multi-couches comprenant :
une couche barrière
une couche d'étanchéité comprenant un mélange de : (i) éthylène et d'interpolymères d'α-oléfine ayant une densité inférieure à environ 0,915 g/cc et dans une quantité d'environ 60% à environ 1% en poids du mélange, et (ii) un polymère contenant du propylène dans une quantité en poids du mélange d'environ 99% à environ 40% ; et
dans lequel le film peut être thermoscellé dans un récipient ayant des joints, dans lequel les joints restent intacts quand le récipient est re-chauffé à 121°C pendant une heure et dans lequel le récipient ne se casse pas, quand il tombe de 2,44 m (8 pieds).

9. Film selon la revendication 8, dans lequel l'α-oléfine a de 3 à 17 atomes de carbone.

10. Film selon la revendication 8, dans lequel l'α-oléfine a de 4 à 8 atomes de carbone.

11. Film selon l'une quelconque des revendications 8 à 10, dans lequel le copolymère d'éthylène et d'αoléfine est obtenu en utilisant un catalyseur à site unique.

12. Film selon l'une quelconque des revendications 7 à 11, dans lequel le mélange de couche de joint comprend en outre un capteur d'oxygène.

13. Film selon l'une quelconque des revendications 7 à 12, dans lequel la couche barrière contient dans le groupe constitué de polyamides et de copolymères d'alcool de vinyl éthylène.

14. Film selon la revendication 13, dans lequel le mélange de couche de barrière comprend en outre un capteur d'oxygène.

15. Film selon les revendications 5, 12 ou 14, dans lequel le capteur d'oxygène est un polydiène oxydable.

16. Film selon les revendications 5, 12 ou 14, dans lequel le capteur d'oxygène est un polyéther oxydable.

17. Film selon l'une quelconque des revendications 7 à 16, dans lequel la couche barrière comprend en outre un sel d'acide gras métallique.

18. Film selon l'une quelconque des revendications 7 à 17, dans lequel le film comprend en outre une couche d'adhérence fixant la couche barrière à la couche interne.

19. Film selon l'une quelconque des revendications précédentes, dans lequel le polymère contenant le propylène est choisi dans le groupe constitué d'homopolymères de propylène, et de copolymères de propylène.

20. Film selon la revendication 19, dans lequel le polymère contenant du propylène est obtenu, en utilisant un catalyseur choisi dans le groupe constitué de Ziegler-Natta et de site unique.

21. Film selon l'une quelconque des revendications précédentes, dans lequel le polymère contenant du propylène est un polymère à résistance à fusion élevée ayant un indice de fluidité de 10 g/10 min à 800 g/10 min.

22. Film selon l'une quelconque des revendications précédentes, dans lequel le polymère contenant du propylène est un mélange d'un premier polymère contenant du propylène et un second polymère contenant du propylène.

23. Film selon la revendication 22, dans lequel le premier polymère contenant du propylène a un premier indice de fluidité et le second polymère contenant du propylène a un indice de fluidité et dans lequel le premier indice de fluidité est supérieur au second indice de fluidité.

24. Film selon la revendication 23, dans lequel le premier indice de fluidité est d'environ 3 fois supérieur au second indice de fluidité.

25. Film selon la revendication 23, dans lequel le premier indice de fluidité est d'environ 5 fois supérieur au second indice de fluidité.

26. Film selon l'une quelconque des revendications 22 à 25, dans lequel le premier polymère contenant du propylène a une première température de point de fusion et le second polymère contenant du propylène a une seconde température de point de fusion et dans lequel la première température de point de fusion est supérieure à la seconde température de point de fusion d'au moins environ 5°C.

27. Film selon la revendication 26, dans lequel la première température de point de fusion est supérieure à la seconde température de point de fusion d'au moins environ 10°C.

28. Film selon l'une quelconque des revendications précédentes, capable d'être stérilisé par une exposition au rayonnement et par une exposition à l'oxyde d'éthylène.

29. Film selon l'une quelconque des revendications précédentes, dans lequel la surface du film est non collante après chauffage à 121°C.

30. Film selon l'une quelconque des revendications précédentes, qui est capable de former un joint détachable pour former un récipient à chambres multiples.

31. Film selon l'une quelconque des revendications précédentes, capable de former un joint permanent pour former un récipient à chambres multiples.

32. Récipient ayant une paroi faite d'un film selon l'une quelconque des revendications 1 à 31, le récipient ayant une résistance à l'impact suffisante pour résister à une chute d'une hauteur de 2,44 m (8 pieds) sans se casser.

33. Récipient à chambres multiples ayant un joint détachable séparant les chambres et un joint permanent autour de la périphérie, le récipient comprenant un film comme défini dans les revendications 1, 7 ou 8.

34. Récipient selon la revendication 32 ou 33 qui peut résister à la congélation à -20°C et à un chauffage au four à micro-ondes à 100°C.
